# EUROPÄISCHE PATENTANMELDUNG

(11) **EP 1 642 669 A2**
(43) Veröffentlichungstag der Anmeldung: **05.04.2006**
(21) Anmeldenummer: 05020767.9
(22) Anmeldetag: 23.09.2005
(51) Int. Cl.: B23K 26/36

(54) **Heckenschere**

(30) Priorität: 01.10.2004 DE 102004047878
(71) Anmelder: GARDENA Manufacturing GmbH, 89079 Ulm (DE)
(72) Erfinder: Jehle, Rainer, 89129 Langenau (DE)

(57) **Zusammenfassung**

Für eine Heckenschere wird vorgeschlagen, die nach Schneiden einer Zahnstruktur und nachfolgendem Schleifen entstehenden spitzwinkligen Schneidkanten nachträglich mittels Laserstrahleinwirkung auf eine Materialhärte zu härten, welche größer ist als die Härte im Untermesser gebildeten Schneiden mit größerem Schneidenwinkel.

## Beschreibung

Die Erfindung betrifft eine Heckenschere mit relativ zueinander verschiebbaren Messern.

Typische motorisch angetriebene Heckenscheren weisen zwei langgestreckte Messerbalken auf, welche entlang einer Schnittebene relativ zueinander in Längsrichtung periodisch bewegt werden. Beide Messer besitzen jeweils eine eigene Zahnstruktur, deren Zahnschneiden bei der Hin- und Herbewegung periodisch übereinander gefahren werden und dabei Schnittgut abschneiden. Die Messer werden typischerweise durch Laserstrahlschneiden aus einem Flachmaterial hergestellt, wobei bei, einem der Messer im Regelfall nachfolgend die Schneiden der Zahnflanken mit spitzem Winkel angeschliffen werden.

Aufgabe der vorliegenden Erfindung ist es, die Haltbarkeit der Schneidschärfe solcher Heckenscheren zu verbessern.

Die Erfindung ist im Patentanspruch 1 beschrieben. Die abhängigen Ansprüche enthalten vorteilhafte Ausgestaltungen und Weiterbildungen der Erfindung.

Durch die nach dem Schleifen der Schneidkanten eines Messers nachträglich vorgenommene Laserstrahlhärtung der Schneidkanten auf eine gegenüber dem Grundmaterial höhere Härte kann einerseits die beim Schleifen erzielte Schärfe der Schneidkanten erhalten bleiben, andererseits deren Beständigkeit gegen Abstumpfen erheblich gesteigert werden. Durch Laserstrahlhärten kann zum einen die Härtung auf einen engen Bereich bei der Schneidkante der angeschliffenen Schneide konzentriert werden, wodurch ein Verziehen des Messers zuverlässig vermieden werden kann. Andererseits kann eine hohe Härte des Messermetalls im Bereich der Schneidkanten auf beispielsweise ca. HRC 65 erreicht und dennoch die Zähigkeit des Grundmaterials mit dem gegenüber wesentlich geringerer Härte erhalten bleiben. Das Grundmaterial kann vorteilhafterweise aus einem vorgehärteten Stahl mit einer Härte zwischen HRC 45 und HRC 50 bestehen.

Die Erfindung ist besonders vorteilhaft bei einer Messerkombination mit einem ersten Messer, beispielsweise einem Obermesser mit ―wie vorstehend beschrieben ― spitz geschliffenen und danach lasergehärteten Schneidkanten und einem zweiten Messer, beispielsweise einem Untermesser, dessen bei der Herstellung der Zahnstruktur durch Laserschneiden entstandene, im wesentlichen senkrecht zur Plattenebene der Messerplatte verlaufende Schneidkanten nicht nachgeschliffen werden. Hierdurch wird die Herstellung des Untermessers besonders einfach, wobei vorteilhafterweise beim Schneiden der Zahnstruktur mittels Laserstrahl bereits eine Randzonenhärtung der Zahnschneiden entsteht, welche durch den Verzicht auf ein Nachschleifen erhalten bleibt. Die nach dem Schneiden der Zahnstruktur im ersten Messer, hier also dem Obermesser, spitz geschliffenen und ohne Schneidvorgang oder sonstigen Materialabtrag nachträglich mittels Laserstrahl gehärteten ersten Schneidkanten werden dann vorteilhafterweise auf eine höhere Materialhärte gehärtet als dies beim Schneidvorgang der zweiten Zahnstruktur im Untermesser geschieht. Die schärfer geschliffene Schneidkante des Obermessers, welche typischerweise schneller verschleißt als die rechtwinklige Schneidkante am Untermesser, erreicht durch die höhere Härte eine längere Standzeit.

Die Erfindung ist nachfolgend anhand von Abbildungen zu einem bevorzugten Ausführungsbeispiel noch eingehend veranschaulicht. Dabei zeigt:
- Fig. 1: eine Draufsicht auf eine Messeranordnung,

- Fig. 2: einen Schnitt durch Fig. 1 in Seitenansicht.

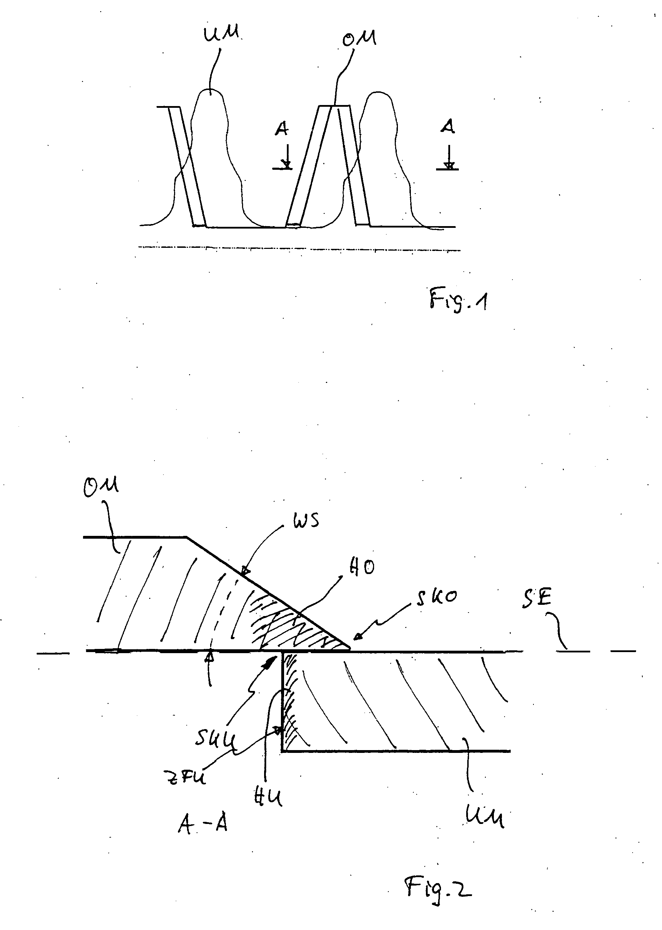

In Fig. 1 ist ausschnittsweise eine Messeranordnung einer Heckenschere in Draufsicht gezeichnet. Das Obermesser OM und das Untermesser UM sind jeweils vorzugsweise aus einem plattenförmigen Material durch Laserschneiden hergestellt. Die Messerform des Untermessers kann hierbei zur Erzielung eines bestimmten Schneidverhaltens komplex gestaltet sein, was für die Herstellung durch Laserstrahlschneiden im wesentlichen unerheblich ist. Die Zahnflanken des Obermessers sind typischerweise linear. Auch für das Obermesser wird die ungefähre Zahnstruktur mittels Laserschneiden aus einem Flachmaterial hergestellt. An den Schneiden der Zahnflanken des Obermessers werden danach aber unter spitzem Winkel gegen die Schnittebene Schneiden angeschliffen.

Im Schnittbild nach Fig. 2 sind die unterschiedlichen Schneidkanten an Obermesser OM und Untermesser UM veranschaulicht. Obermesser und Untermessen gleiten mit einander zugewandten ebenen Gleitflächen entlang einer Schnittebene SE aneinander. Die Schneiden des Obermessers sind von der der Schnittebene abgewandten Seite her unter einem spitzen Schneidenwinkel SW, welcher vorteilhafterweise weniger als 60°, vorzugsweise weniger als 45° beträgt, angeschliffen. Die Schneidkanten SKU der Zahnstruktur des Untermessers sind im wesentlichen rechtwinklig und vorzugsweise beim Schneiden der Zahnstruktur des Untermessers entstanden und nicht nachgeschliffen. Die Schneidkanten der Untermesser haben durch die Herstellung der Zahnstruktur mittels Laserstrahlschneiden eine Randzonenhärtung HU der Zahnflanken ZFU erhalten, wobei sich beispielsweise ausgehend von einer Grundhärte des Messerplattenmaterials von ca. HRC 50 eine Steigerung der Härte auf z. B. HRC 64 für die Zahnflanken ZFU und deren am Übergang zur Schnittebene gebildete Schneidkanten ergibt. Durch den Verzicht auf die Nacharbeitung der Zahnflanken ZFU am Untermesser ist dieses besonders kostengünstig mittels Laserstrahlschneiden herstellbar.

Bei der Herstellung der ungefähren Zahnstruktur des Obermessers mittels Laserstrahlschneiden tritt zwar gleichfalls an den Schnittkanten eine oberflächige Härtung der Flanken auf, diese werden aber beim Schleifen der spitzen Schneiden vollständig wieder abgetragen, so dass an den zugeschliffenen Schneidkanten SKO nur die Härte des ursprünglichen Messerplattenmaterials mit beispielsweise HRC 50 vorliegt.

Durch die nachträgliche Laserstrahlhärtung der spitz zugeschliffenen Schneiden des Obermessers, vorzugsweise lediglich über einen Teilbereich der Schneiden von den Schneidkanten SKO her wird die Materialhärte der Schneidkanten bzw. des dadurch gehärteten Bereichs HO der Schneiden des Obermessers auf einen Härtewert über dem der Schneidkanten der Zahnstruktur des Untermessers erhöht, beispielsweise auf HRC 65. Die Laserstrahlhärtung kann hierbei günstigerweise durch linienförmiges Verfahren des Laserstrahlaufpunkts entlang der Schneiden, typischerweise mit geringem Abstand von den Schneidkanten erfolgen. Die Einwirkung des Laserstrahls erfolgt vorzugsweise von der ebenen, der Schnittebene SE zuweisenden Fläche des Obermessers her.

Die Messer können zusätzlich mit einer Beschichtung, beispielsweise einer an sich bekannten, zur Oberflächenvergütung benutzten Beschichtung versehen werden, beispielsweise TiN oder diamantähnliche Kohlenstoffschichten (DLC). Diese Beschichtung kann vor der nachträglichen Laserhärtung aufgebracht werden und ist dabei transparent für das Licht des zur Härtung eingesetzten Lasers, so dass die Lasereinwirkung durch diese Beschichtung hindurch erfolgt. In anderer Ausführung kann die Beschichtung nach der Laserhärtung der Schneiden vorgenommen werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar. Es können beispielsweise auch die Zahnstrukturen beider Messer einer linienförmigen Laserhärtung unterzogen werden.

## Patentansprüche

1. Heckenschere mit entlang einer Schnittebene relativ zueinander verschiebbaren Messern und jeweils einer Zahnstruktur an jedem Messer, wobei ein erstes Messer eine erste Zahnstruktur mit ersten Schneiden mit einem spitzen Schneidenwinkel von weniger als 60°, insbesondere weniger als 45° aufweist und das Messermetall an den Schneidkanten diesen ersten Schneiden durch Laserhärten eine gegenüber dem Grundmaterial höhere Härte aufweist.

2. Heckenschere nach Anspruch 1, **dadurch gekennzeichnet, dass** die ersten Schneiden geschliffen und danach lasergehärtet sind.

3. Heckenschere nach Anspruch 1 oder 2, **dadurch gekennzeichnet, dass** die ersten Schneiden nur über einen Teilabschnitt ihrer geschliffenen Flanken von der Schneidenkante her gehärtet sind.

4. Heckenschere nach einem der Ansprüche 1 bis 3, **dadurch gekennzeichnet, dass** eine zweite Zahnstruktur an einem zweiten Messer zweite Schneiden aufweist, deren Schneidenwinkel größer ist als der der ersten Schneiden.

5. Heckenschere nach Anspruch 4, **dadurch gekennzeichnet, dass** der Schneidenwinkel der zweiten Schneiden 90° beträgt.

6. Heckenschere nach Anspruch 4 oder 5, **dadurch gekennzeichnet, dass** die zweiten Schneiden Schnittkanten eines Laserkonterschnittes sind.

7. Heckenschere nach Anspruch 6, **dadurch gekennzeichnet, dass** die zweiten Schneiden eine gegenüber dem Grundmaterial des zweiten Messers größere Härte aufweisen.

8. Heckenschere nach einem der Ansprüche 1 bis 7, **dadurch gekennzeichnet, dass** die ersten Schneiden eine größere Härte aufweisen als die zweiten Schneiden.

9. Heckenschere nach einem der Ansprüche 1 bis 8, **dadurch gekennzeichnet, dass** die Schneiden zumindest einseitig mit einer Beschichtung versehen sind.

10. Heckenschere nach Anspruch 19, **dadurch gekennzeichnet, dass** die Beschichtung für das Laserlicht des Härtelasers transparent ist.

11. Verfahren zur Herstellung eines Messers einer Heckenschere mit geschliffenen Schneidkanten, **dadurch gekennzeichnet, dass**
a) in einer flachen metallischen Messerplatte eine Zahnstruktur geschnitten wird,
b) an den Zahnflanken von einer Messerfläche her Schneiden mit spitzem Schneidenwinkel angeschliffen werden,
c) das Metall der Schneiden danach zumindest im Bereich ihrer Schneidkanten durch Laserstrahleinwirkung gehärtet werden.

12. Verfahren nach Anspruch 11, **dadurch gekennzeichnet, dass** die Schneiden nur über einen Teilabschnitt der geschliffenen Flanken gehärtet werden.

13. Verfahren nach Anspruch 11 oder 12, **dadurch gekennzeichnet, dass** der Laserstrahl auf die nicht geschliffene Flanke der Schneiden gerichtet wird.

14. Verfahren nach einem der Ansprüche 11 bis 13, **dadurch gekennzeichnet, dass** die Messerplatte mit einer nichtmetallischen harten Beschichtung versehen wird.

15. Verfahren nach einem der Ansprüche 11 bis 14, **dadurch gekennzeichnet, dass** die Zahnstruktur durch Laserstrahlschneiden aus der Messerplatte geschnitten wird.
